# EUROPÄISCHE PATENTSCHRIFT

(11) **EP 4 548 047 B1**
(45) Veröffentlichungstag und Bekanntmachung des Hinweises auf die Patenterteilung: **29.04.2026**
(21) Anmeldenummer: 23729346.9
(22) Anmeldetag: 23.05.2023
(51) Int. Cl.: G01C 21/36, G01C 21/00

(54) **VERFAHREN ZUR ERMITTLUNG UND BEREITSTELLUNG VON FAHRSPURVERLÄUFEN**
METHOD FOR DETERMINING AND PROVIDING LANE COURSES
PROCÉDÉ DE DÉTERMINATION ET DE FOURNITURE DE TRACÉS DE VOIES

(30) Priorität: 28.06.2022 DE 102022002334
(43) Veröffentlichungstag der Anmeldung: 07.05.2025
(73) Patentinhaber: Mercedes-Benz Group AG, 70372 Stuttgart (DE)
(72) Erfinder: MONNINGER, Thomas, Menlo Park, 94025 (US)
(74) Vertreter: Novagraaf Group
(86) Internationale Anmeldenummer: PCT/EP2023/063838
(87) Internationale Veröffentlichungsnummer: WO 2024/002589

(56) Entgegenhaltungen:
- EP-A2- 2 679 956
- US-A1- 2022 089 183

## Beschreibung

Die Erfindung betrifft ein Verfahren zur Ermittlung und Bereitstellung von Fahrspurverläufen von Straßen mittels einer mit Fahrzeugen einer Fahrzeugflotte datentechnisch gekoppelten zentralen Rechnereinheit.

Aus der DE 10 2013 211 696 A1 sind ein Verfahren zum Vervollständigen und/oder Aktualisieren einer digitalen Straßenkarte einer geografischen Region, eine Vorrichtung für ein Kraftfahrzeug und ein Kraftfahrzeug bekannt. Das Verfahren weist die Schritte auf: a) ein Erfassen eines digitalen Bildes eines Streckenabschnittes mittels einer Kamera eines auf dem Streckenabschnitt befindlichen Kraftfahrzeuges; b) ein Ermitteln einer aktuellen Position des Kraftfahrzeuges in Breitenrichtung des Streckenabschnittes und/oder zumindest einer Eigenschaft des Streckenabschnittes anhand des Bildes mittels einer Recheneinrichtung des Kraftfahrzeuges; c) Übermitteln eines Datensatzes an eine Servereinrichtung, der Informationen über eine geografische Position des Erfassens des Bildes sowie Informationen über die zumindest eine ermittelte Eigenschaft des Streckenabschnittes und/oder die Position in Breitenrichtung beinhaltet. Dabei werden die Schritte a) bis c) durch eine Vielzahl von in der Region befindlichen Kraftfahrzeugen durchgeführt und die digitale Straßenkarte wird anhand der empfangenen Datensätze mittels der Servereinrichtung vervollständigt und/oder aktualisiert.

Aus der DE 10 2013 018 315 A1 ist ein Verfahren zum Bereitstellen eines Umfeldmodells für ein Fahrzeug bekannt, bei dem vorgesehen ist, eine Gitterkarte für eine Darstellung des Umfeldmodells zu verwenden und diese Gitterkarte an einen Fahrspurverlauf anzupassen, bspw. bei einer Krümmung der Fahrspur auch die Zellen der Gitterkarte gekrümmt anzuordnen.

Aus der DE 10 2013 208 521 A1 ist ein Verfahren zum Erstellen eines Straßenmodells bekannt, wobei vorgesehen ist, aus Flottendaten Trajektoriedaten zu ermitteln und aus diesen Trajektoriedaten unter Zuhilfenahme statistischer Methoden ein Straßenmodell zu erstellen.

Aus der DE 10 2019 119 002 A1 ist ein Verfahren zum Bestimmen einer Fahrspur bekannt, wobei vorgesehen ist, Fahrspurmarkierungen abzutasten, Orientierungen der Abtastungen zu ermitteln und die Abtastungen unter Berücksichtigung der Orientierungen zu clustern.

Aus der EP 2 888 604 B2 ist ein Verfahren zur Bestimmung eines Fahrspurverlaufs für ein Fahrzeug bekannt, wobei vorgesehen ist, in einer Gitterkarte die Position des Fahrzeugs zu bestimmen sowie dessen Orientierung und Abstand zu Gitterzellen mit Fahrbahnbegrenzung zu bestimmen.

Die EP 2 679 956 A2 stellt ein Verfahren zum Identifizieren von Diskrepanzen in digitalen Kartendaten bereit. Das Verfahren umfasst ein Auswählen eines oder mehrerer Kandidatenorte als eine Teilmenge von Orten innerhalb von Positionsdaten, die sich auf die Bewegung einer Vielzahl von Vorrichtungen in Bezug auf eine Zeit in einem Bereich beziehen. Jeder der Kandidatenorte wird basierend auf einer Verteilung der Bewegungsrichtungen der Vorrichtungen an jedem Kandidatenort zu einer oder mehreren vorgegebenen Kategorien zugeordnet. Weiter erfolgt ein Vergleichen der Kandidatenstandorte mit einer Datenbank von Kartendaten und ein Identifizieren von Standorten mit möglichen Abweichungen in den digitalen Kartendaten basierend auf der Kategorie jedes Kandidatenstandorts.

Der Erfindung liegt die Aufgabe zugrunde, ein neuartiges Verfahren zur Ermittlung von Fahrspurverläufen von Straßen anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Ermittlung und Bereitstellung von Fahrspurverläufen von Straßen mittels einer mit Fahrzeugen einer Fahrzeugflotte datentechnisch gekoppelten zentralen Rechnereinheit sieht erfindungsgemäß vor, dass eine geometrische Karte mit geometrischen Spurbegrenzungen und Auftragen eines Gitternetzes mit Gitternetzzellen einer vorgegebenen Größe auf die Karte bereitgestellt wird. Es werden Flottendaten von Fahrzeugen der Fahrzeugflotte gesammelt, wobei die Flottendaten Positionssequenzen umfassen, die von den Fahrzeugen der Fahrzeugflotte abgefahren werden. Weiterhin werden Fahrzeugausrichtungen der Fahrzeuge an Positionen der Gitternetzzellen aus den gesammelten Positionssequenzen ermittelt und die ermittelten Fahrzeugausrichtungen werden diskretisiert. Anschließend werden für einzelne Gitternetzzellenpositionen jeweils eines Histogramms für die an der Position der jeweiligen Gitterzelle ermittelten diskretisierten Fahrzeugausrichtungen erzeugt, ein Kartenausschnitt mit einer vorgegebenen Menge von Gitternetzzellen ausgewählt und Fahrspurverläufe auf dem Kartenausschnitt mittels eines lernbasierten Verfahrens aus den für die Gitternetzzellen des Kartenausschnittes erstellten Histogrammen und den geometrischen Spurbegrenzungen auf dem Kartenausschnitt ermittelt.

Mittels Anwendung des Verfahrens wird eine kombinierte Verarbeitung von geometrischer Infrastruktur und einem Flottenfahrverhalten ermöglicht. Dadurch kann eine vollautomatisierte Ableitung von Fahrspurverläufen realisiert werden, wohingegen eine Ableitung rein auf geometrischer Infrastruktur stets eine manuelle Nacharbeit erfordert und eine Ableitung der Fahrspurverläufe basierend auf dem Flottenfahrverhalten keine volle Abdeckung erreicht.

Durch eine Verwendung von geometrischen Informationen kann weitestgehend sichergestellt werden, dass modellierte Fahrspurverläufe sich an einer gegebenen Infrastruktur orientieren.

Da das Verfahren die Verwendung des Flottenfahrverhaltens vorsieht, wird eine menschliche Fahrweise, das heißt ein manueller Fahrbetrieb von Fahrzeugen der Fahrzeugflotte berücksichtigt. Dadurch wird eine Fahrspurmodellierung in unstrukturierten Bereichen, zum Beispiel an Stellen mit fehlender Fahrspurmarkierung und/oder Busspuren, unterstützt.

Das lernbasierte Verfahren berücksichtigt Sonderfälle im Wesentlichen automatisch, wenn diese im Datensatz, das heißt in den Flottendaten, abgebildet sind. Das Verfahren ist mittels der Flottendaten skalierbar, wodurch sich die Ermittlung der Fahrspurverläufe mit zunehmenden Trainingsbeispielen kontinuierlich verbessert.

Darüber hinaus kann das lernbasierte Verfahren Geometrien von Fahrspurverläufen direkt generieren. Weiterhin kann optional ein älterer Verlauf von Fahrspuren in dem lernbasierten Verfahren berücksichtigt werden, so dass nur Parameter eines Fahrspursegmentes in Bezug auf Ankerpunkt, Ausrichtung, Krümmung und/oder Spurbreite prädiziert werden müssen. Dadurch ist ein Trainingsprozess erleichtert und es kann weitestgehend sichergestellt werden, dass stets geometrisch valide Fahrspursegmente generiert werden.

Eine Abstrahierung der anhand der Flottendaten der Fahrzeuge ermittelbaren Fahrspurverläufe in das Gitternetz ermöglicht eine konsistente Prozessierung eines Fahrverhaltens eines der Fahrzeugflotte zugehörigen Fahrzeuges bei variierender Anzahl an Befahrungen.

Ein mehrdimensionales Gitternetz erlaubt eine Modellierung von mehreren Fahrtrichtungen, beispielsweise auf bidirektionalen Straßen oder in Kreuzungsbereichen.

Ein in Abhängigkeit verschiedener Zeitpunkte erstelltes Gitternetz ermöglicht eine Detektion von Änderungen im Flottenfahrverhalten und damit einen Rückschluss auf Änderungen einer Straßeninfrastruktur. Somit können auch Änderungen ermittelt werden, die nicht anhand erfasster Signale einer Fahrzeugsensorik detektiert werden, beispielsweise ein Verkehrszeichen, welches einen Abbiegevorgang untersagt.

Da die Prozessierung auf Ebene der Gitternetzzellen erfolgt, ist eine Zerlegung in Teilprobleme in Bezug auf die Ermittlung der Fahrspurverläufe und dadurch eine Parallelisierung möglich.

In einer Ausführung werden die ermittelten Fahrspurverläufe den Fahrzeugen der Fahrzeugflotte zum Abrufen bereitgestellt. Anhand dieser Bereitstellung der ermittelten Fahrspurverläufe ist ein optimierter automatisierter und autonomer Fahrbetrieb des entsprechenden Fahrzeuges möglich. Der jeweilige Fahrspurverlauf ist bekannt, so dass es im automatisierten oder autonomen Fahrbetrieb, beispielsweise aufgrund einer fehlenden Fahrspurmarkierung, nicht erforderlich ist, dass ein Fahrer des Fahrzeuges eine Fahraufgabe übernehmen muss und das Fahrzeug im manuellen Fahrbetrieb bewegt.

In einer weiteren Ausführung werden die ermittelten Fahrspurverläufe den Fahrzeugen als Daten einer digitalen Karte bereitgestellt und in dieser hinterlegt, so dass ein automatisierter oder autonomer Fahrbetrieb des Fahrzeuges wesentlich verbessert werden kann, ohne dass ein Fahrer eingreifen muss.

Eine mögliche Ausführung des Verfahrens sieht vor, dass die ermittelten Fahrspurverläufe einem Trajektorienplanungsmodul autonom fahrender Fahrzeuge der Fahrzeugflotte zugeführt werden. Basierend auf den ermittelten Fahrspurverläufen wird dann eine Trajektorie für das jeweils autonom fahrende Fahrzeug geplant, so dass ein optimierter autonomer Fahrbetrieb des Fahrzeuges im Wesentlichen ohne Unterbrechungen durch eine Übergabe einer Fahraufgabe an einen Fahrer des Fahrzeuges realisiert werden kann.

In einer Weiterbildung des Verfahrens erfolgt ein Training des lernbasierten Verfahrens mittels erstellten Histogrammen und mittels Ground-Truth-Karten, die für vorgegebene Regionen erstellt werden. Somit wird das lernbasierte Verfahren anhand realer Daten trainiert und zur Ermittlung der Fahrspurverläufe anhand der übermittelten Flottendaten optimiert.

Ausführungsbeispiele der Erfindung werden im Folgenden anhand von Zeichnungen näher erläutert.

Dabei zeigen:
- Fig. 1: schematisch einen Ausschnitt einer geometrischen Karte mit geometrischen Spurbegrenzungen und ein aufgetragenes Gitternetz mit Gitternetzzellen,
- Fig. 2: schematisch ein für Gitternetzzellenpositionen jeweils erzeugtes Histogramm mit Häufigkeitsverteilungen und
- Fig. 3: schematisch eine Mehrzahl schlauchartiger Korridore.

Einander entsprechende Teile sind in allen Figuren mit den gleichen Bezugszeichen versehen.

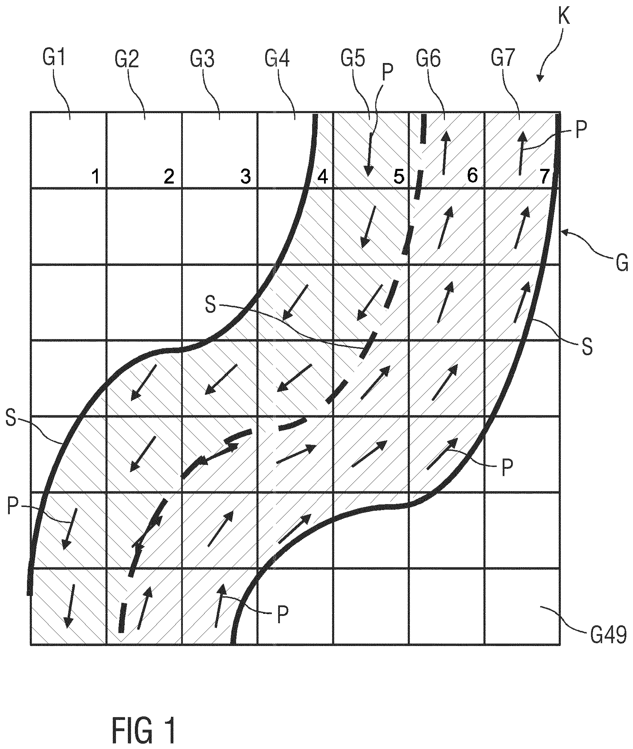

In Figur 1 ist ein Ausschnitt einer geometrischen Karte K mit geometrischen Spurbegrenzungen S und ein aufgetragenes Gitternetz G mit Gitternetzzellen G1 bis G49 dargestellt.

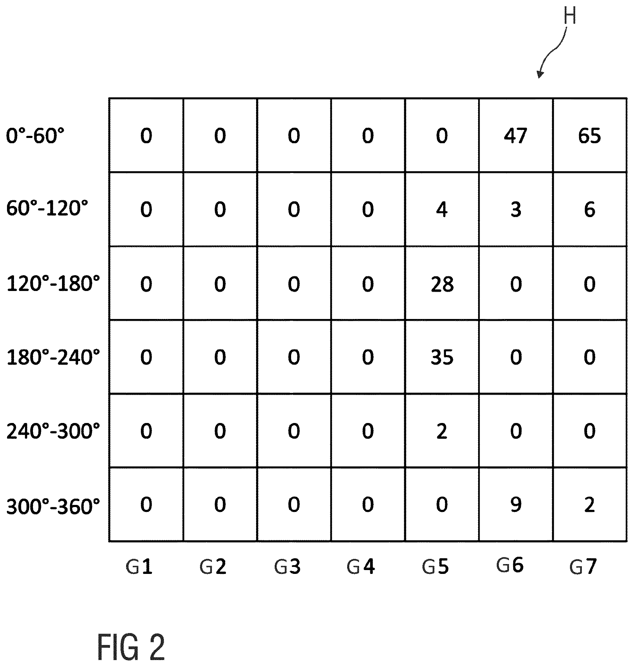

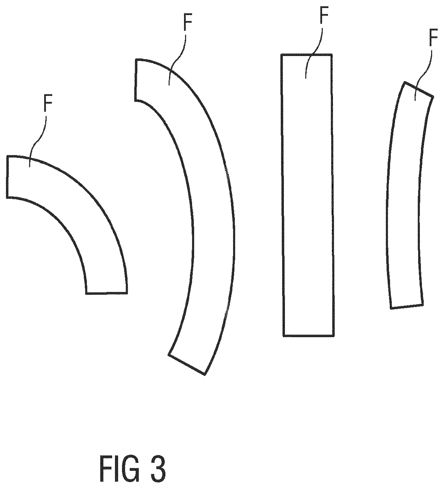

Figur 2 zeigt das Gitternetz G mit den mittels einer Datenstruktur ausgefüllten Gitternetzzellen G1 bis G49 und in Figur 3 ist eine Mehrzahl ermittelter schlauchartiger Korridore F dargestellt.

Im Allgemeinen ist bekannt, dass ein automatisierter und autonomer Fahrbetrieb eines Fahrzeuges eine hochgenaue digitale Karte, das heißt Straßenkarte, erfordert, wobei ein Inhalt der digitalen Karte korrekt und aktualisiert sein muss. Für Anwendungsfälle des automatisierten Fahrbetriebes auf einem Level 2+ oder höher einer Norm SAE J3016 sind solche digitalen Karten mit einer spurgenauen Modellierung einer Topologie zwingend erforderlich. Eine Kartierung wird perspektivisch anhand erfasster Signale einer Fahrzeugsensorik von Fahrzeugen einer Fahrzeugflotte, insbesondere eines Fahrzeugherstellers, durchgeführt. Mittels der Fahrzeuge der Fahrzeugflotte wird eine vergleichsweise großflächige Abdeckung erreicht und die Fahrzeuge senden Flottendaten als Informationen in Bezug auf eine statische Infrastruktur, wie beispielsweise erkannte Verkehrszeichen und Fahrspurmarkierungen, an eine mit den Fahrzeugen der Fahrzeugflotte datentechnisch gekoppelte zentrale Rechnereinheit.

Neben diesen erkannten Informationen in Bezug auf die statische Infrastruktur als Umgebungsinformationen wird auch eine anhand einer Satellitennavigation des jeweiligen Fahrzeuges geortete Pose, insbesondere Ausrichtung, an die zentrale Rechnereinheit übermittelt, um eine Detektion relativ zu einem Fahrzeugkoordinatensystem in ein globales Koordinatensystem zu überführen. Zudem liefert die Satellitennavigation Informationen über ein Fahrverhalten einzelner Fahrzeuge, insbesondere über befahrbare Korridore F.

Im Folgenden wird ein Verfahren zur Ermittlung und Bereitstellung von Fahrspurverläufen von Straßen mittels der mit den Fahrzeugen der Fahrzeugflotte datentechnisch gekoppelten zentralen Rechnereinheit beschrieben. Dabei ist das Verfahren mehrstufig ausgebildet.

Zunächst wird die geometrische Karte K mit den Spurbegrenzungen S bereitgestellt und das Gitternetz G mit den Gitternetzzellen G1 bis G49 aufgetragen. Dabei weisen die Gitternetzzellen G1 bis G49 eine vorgegebene Größe in Bezug auf die Karte K auf. Insbesondere wird die geometrische Karte K aus Beobachtungen der Fahrzeuge der Fahrzeugflotte mit aus dem Stand der Technik bekannten Ansätzen bereitgestellt. Einzelne Schritte dazu sind ein sogenanntes single-trace pose optimization, multi-trace alignment, geometric aggregation.

In der zentralen Rechnereinheit werden Flottendaten der Fahrzeuge der Fahrzeugflotte gesammelt. Dabei umfassen die Flottendaten Positionssequenzen, die von den Fahrzeugen der Fahrzeugflotte gefahren werden. Als Flottendaten wird die jeweilige Ausrichtung der Fahrzeuge erfasst, wobei die Positionssequenzen eine vorgegeben Dauer oder Länge aufweisen. Die Dauer oder Länge ist vergleichsweise kurz gewählt, um die gesammelten Flottendaten zu anonymisieren und Rückschlüsse auf ein Bewegungsprofil des jeweiligen Fahrzeuges zu erschweren. Dabei werden alle Ausrichtungen zur geometrischen Karte K für spurgenaue Positionen der Fahrzeuge lokalisiert und erfasst. Insbesondere werden aus den gesammelten Positionssequenzen die Ausrichtungen der Fahrzeuge an Positionen der Gitternetzzellen G1 bis G49 ermittelt.

Die ermittelten Fahrzeugausrichtungen werden diskretisiert, das heißt es erfolgt eine Einordnung der ermittelten Fahrzeugausrichtungen in ein vorgegebenes Raster, beispielsweise ein 60°-Raster. Mit anderen Worten: es wird eine Datenstruktur für das Gitternetz G in Abhängigkeit von einer jeweiligen geografischen Position generiert. Die Abhängigkeit des Gitternetzes G von der geografischen Position, das heißt in Bezug auf das globale Koordinatensystem mit den Koordinaten x, y, z, kann mittels des vorgegebenen Rasters der geografischen Karte K in Quadrate von 1 m x 1 m diskretisiert werden.

Darauffolgend wird für einzelne Gitternetzzellenpositionen jeweils ein Histogramm H für die an der Position der jeweiligen Gitternetzzelle G1 bis G49 ermittelten diskretisierten Fahrzeugausrichtungen erzeugt. Dabei wird mittels der Gitternetzzellen G1 bis G49 eine Häufigkeitsverteilung in Abhängigkeit von der Fahrtrichtung mehrdimensional modelliert, um geografische Punkte mit mehreren Fahrtrichtungen, beispielsweise in Kreuzungsbereichen, abbilden zu können. Die Häufigkeitsverteilung kann beispielsweise mittels Klassifizierung in 10°-Klassen diskretisiert werden.

Ein lernbasiertes Verfahren, beispielsweise Convolutional Neural Network, Transformer Network, Graph Neural Network, nutzt als Eingangsinformationen geometrische Spurbegrenzungen S, insbesondere Fahrspurmarkierungen, Randsteine etc., aus der zuvor bereitgestellten geometrischen Karte K und das Gitternetz G mit dem Häufigkeitsverteilungen aus den Flottendaten und liefert als Ausgangsinformationen ein Spurmodell.

Das lernbasierte Verfahren wird mittels Ground-Truth-Karten trainiert, welche für bestimmte Regionen die tatsächlichen Fahrspurverläufe abbilden. Das lernbasierte Verfahren lernt anhand von Beispielen, wie aus geometrischen Spurbegrenzungen S (Fahrspurmarkierungen, Randsteinen etc.) und einem Histogramm H das Spurmodell generiert werden kann.

Figur 1 zeigt beispielhaft einen Ausschnitt eines Gitternetzes G mit einer Überlagerung der Spurbegrenzungen S. Modi einer Verteilung über die Fahrtrichtung sind mittels Pfeilen P dargestellt.

Vergleichsweise gut erkennbar ist, dass in Gitternetzzellen G1 bis G49, die von Fahrzeugen in beide Fahrtrichtungen durchfahren werden, zwei entgegengesetzt zueinander gerichtete Pfeile P dargestellt sind.

Gitternetzzellen G1 bis G49 einer ersten Zeile Z1 sind nummeriert, wobei ein erster schraffiert dargestellter Korridor F und ein anders schraffiert dargestellter zweiter Korridor F die mittels des lernbasierten Verfahrens genierten Fahrspurverläufe sind.

In Figur 2 ist beispielhaft ein jeweiliges Histogramm H für die Gitternetzzellen G1 bis G7 des Gitternetzes G dargestellt. Gewählt wurde eine Diskretisierung der Fahrzeugrichtung mit 60°-Klassen. Insbesondere zeigt Figur 2 ein jeweiliges Histogramm H mit den für die jeweilige in Figur 1 gezeigte Gitternetzzelle G1 bis G7 anzahlmäßig ermittelten diskretisierten Fahrzeugausrichtungen.

Gemäß einer in Figur 1 gezeigten Gitternetzzelle G5 ist erkennbar, dass in dieser ein Fahrzeug mit einer Ausrichtung gefahren ist, die mittels eines nach unten zeigenden Pfeiles P dargestellt ist. Deshalb liegt ein Modus (ein Maximum einer Verteilung) im Histogramm H bei etwa 200°.

Die Gitternetzzellen G6 und G7 werden mit einer Ausrichtung der Fahrzeuge in entgegengesetzte Fahrtrichtung durchfahren, wobei der Modus im Histogramm H bei etwa 20° liegt.

Das jeweilige auf den Gitternetzzellen G1 bis G7 des Gitternetzes G basierende Histogramm H ist eine vergleichsweise effiziente Repräsentation beliebig vieler Befahrungen der Gitternetzzellen G1 bis G49 des auf die geografische Karte K aufgetragenen Gitternetzes G und gibt ein Flottenfahrverhalten der Fahrzeuge in einheitlicher Form wieder.

Anhand eines solchen Prozesses einer Abstrahierung dient das Histogramm H als konsistenter Input für das nachgelagerte lernbasierte Verfahren, welches unter Hinzunahme einer geometrischen Umgebung die Fahrspurverläufe ableitet.

Eine solche einheitliche Repräsentation einer variierbaren Anzahl von Befahrungen kann außerdem dazu genutzt werden, vergleichsweise frühzeitig in einer Kartierungs-Entwicklung Änderungen im Flottenfahrverhalten zu detektieren. So können auch Änderungen im Flottenfahrverhalten erfasst werden, die nicht anhand erfasster Signale der Fahrzeugsensorik detektiert werden, wie beispielsweise ein spezielles Verkehrszeichen, welches einen Abbiegevorgang unterbindet.

Die von mittels des lernbasierten Verfahrens zu generierenden Fahrspurverläufe sind aus geometrischer Sicht schlauchartige Korridore F. Aus diesem Grund kann optional ein vorliegender älterer Fahrspurverlauf mittels des lernbasierten Verfahrens berücksichtigt werden, so dass das lernbasierte Verfahren nur Parameter eines Fahrspursegmentes prädizieren muss, zum Beispiel Ankerpunkt, Ausrichtung, Krümmung, Spurbreite. Dies erleichtert einen Trainingsprozess und kann sicherstellen, dass stets geometrisch valide Fahrspurverläufe generiert werden. Beispiele für solche schlauchartigen Korridore F, welche durch geeignete Wahl von Eingangsparametern für das lernbasierte Verfahren entstehen, sind in Figur 3 gezeigt.

Weiterhin sieht das Verfahren vor, dass die ermittelten Fahrspurverläufe in Form der schlauchartigen Korridore F den Fahrzeugen der Fahrzeugflotte als Daten in der digitalen Karten bereitgestellt werden.

Insbesondere werden die ermittelten Fahrspurverläufe einem Trajektorienplanungsmodul eines automatisiert oder autonom fahrenden Fahrzeuges zugeführt, so dass eine Trajektorie des Fahrzeuges entsprechend der vorhandenen Fahrspurverläufe geplant werden kann.

## Patentansprüche

1. Verfahren zur Ermittlung und Bereitstellung von Fahrspurverläufen von Straßen mittels einer mit Fahrzeugen einer Fahrzeugflotte datentechnisch gekoppelten zentralen Rechnereinheit,
**gekennzeichnet durch** die Schritte:
- Bereitstellen einer geometrischen Karte (K) mit geometrischen Spurbegrenzungen (S) und Auftragen eines Gitternetzes (G) mit Gitternetzzellen (G1 bis G49) einer vorgegebenen Größe auf die Karte (K);
- Sammeln von Flottendaten von Fahrzeugen der Fahrzeugflotte, wobei die Flottendaten Positionssequenzen umfassen, die von den Fahrzeugen der Fahrzeugflotte abgefahren werden;
- Ermitteln von Fahrzeugausrichtungen der Fahrzeuge an Positionen der Gitternetzzellen (G1 bis G49) aus den gesammelten Positionssequenzen;
- Diskretisieren der ermittelten Fahrzeugausrichtungen;
- Erzeugen für einzelne Gitternetzzellenpositionen jeweils eines Histogramms (H) für die an der Position der jeweiligen Gitternetzzelle (G1 bis G49) ermittelten diskretisierten Fahrzeugausrichtungen;
- Auswählen eines Kartenausschnittes mit einer vorgegebenen Menge von Gitternetzzellen (G1 bis G49);und
- Ermitteln der Fahrspurverläufe auf dem Kartenausschnitt mittels eines lernbasierten Verfahrens aus den für die Gitternetzzellen (G1 bis G49) des Kartenausschnittes erstellten Histogrammen (H) und den geometrischen Spurbegrenzungen (S) auf dem Kartenausschnitt.

2. Verfahren nach Anspruch 1,
**dadurch gekennzeichnet, dass** die ermittelten Fahrspurverläufe den Fahrzeugen der Fahrzeugflotte zum Abrufen bereitgestellt werden.

3. Verfahren nach Anspruch 1 oder 2,
**dadurch gekennzeichnet, dass** die ermittelten Fahrspurverläufe den Fahrzeugen als Daten in einer digitalen Karte bereitgestellt werden.

4. Verfahren nach einem der vorhergehenden Ansprüche,
**dadurch gekennzeichnet, dass** die ermittelten Fahrspurverläufe einem Trajektorienplanungsmodul autonom fahrender Fahrzeuge der Fahrzeugflotte zugeführt werden.

5. Verfahren nach einem der vorhergehenden Ansprüche,
**dadurch gekennzeichnet, dass** ein Training des lernbasierten Verfahrens mittels erstellten Histogrammen (H) und mittels Ground-Truth-Karten, die für vorgegebene Regionen erstellt werden, erfolgt.

## Claims

1. Method for determining and providing lane courses of roads by means of a central computing unit which is data-linked to vehicles in a vehicle fleet,
**characterized by** the steps of:
- providing a geometric map (K) having geometric lane boundaries (S) and applying a grid (G) having grid cells (G1 to G49) of a predefined size to the map (K);
- collecting fleet data from vehicles in the vehicle fleet, the fleet data comprising position sequences driven by the vehicles in the vehicle fleet;
- determining vehicle orientations of the vehicles at positions of the grid cells (G1 to G49) from the collected position sequences;
- discretizing the determined vehicle orientations;
- generating, for each individual grid cell position, a histogram (H) for the discretized vehicle orientations determined at the position of the relevant grid cell (G1 to G49);
- selecting a map section having a predefined set of grid cells (G1 to G49); and
- determining the lane courses on the map section from the histograms (H) created for the grid cells (G1 to G49) of the map section and the geometric lane boundaries (S) on the map section by means of a learning-based method.

2. Method according to claim 1,
**characterized in that** the determined lane courses are provided to the vehicles in the vehicle fleet for retrieval.

3. Method according to claim 1 or claim 2,
**characterized in that** the determined lane courses are provided to the vehicles as data in a digital map.

4. Method according to any of the preceding claims,
**characterized in that** the determined lane courses are supplied to a trajectory planning module of autonomously driving vehicles in the vehicle fleet.

5. Method according to any of the preceding claims,
**characterized in that** training of the learning-based method is carried out by means of created histograms (H) and by means of ground truth maps generated for predefined regions.

## Revendications

1. Procédé pour la détermination et la fourniture de tracés de voies de circulation de routes au moyen d'une unité de calcul centrale couplée par une technique de transmission de données aux véhicules d'une flotte de véhicules,
**caractérisé par** les étapes consistant à :
- fournir une carte (K) géométrique comportant des limites de voies géométriques (S) et appliquer un quadrillage (G) comportant des cellules de quadrillage (G1 à G49) d'une taille prédéfinie sur la carte (K) ;
- collecter des données de flotte de véhicules de la flotte de véhicules, dans lequel les données de flotte comprennent des séquences de positions parcourues par les véhicules de la flotte de véhicules ;
- déterminer des orientations de véhicules des véhicules aux positions des cellules de quadrillage (G1 à G49) à partir des séquences de positions collectées ;
- discrétiser les orientations de véhicules déterminées ;
- générer, pour des positions de cellules de quadrillage individuelles, respectivement un histogramme (H) pour les orientations de véhicule discrétisées déterminées à la position de la cellule de quadrillage (G1 à G49) respective ;
- sélectionner une section de carte comportant une quantité prédéfinie de cellules de quadrillage (G1 à G49) ; et
- déterminer les tracés de voies de circulation sur la section de carte au moyen d'un procédé basé sur l'apprentissage à partir des histogrammes (H) établis pour les cellules de quadrillage (G1 à G49) de la section de carte et des délimitations de voies géométriques (S) sur la section de carte.

2. Procédé selon la revendication 1,
**caractérisé en ce que** les tracés de voies de circulation déterminés sont fournis aux véhicules de la flotte de véhicules pour être appelés.

3. Procédé selon la revendication 1 ou 2,
**caractérisé en ce que** les tracés de voies de circulation déterminés sont fournis aux véhicules sous forme de données dans une carte numérique.

4. Procédé selon l'une des revendications précédentes,
**caractérisé en ce que** les tracés de voies de circulation déterminés sont amenés à un module de planification de trajectoires de véhicules à conduite autonome de la flotte de véhicules.

5. Procédé selon l'une des revendications précédentes,
**caractérisé en ce qu'un** apprentissage du procédé basé sur l'apprentissage est effectué au moyen d'histogrammes (H) établis et au moyen de cartes de réalité de terrain qui sont établies pour des régions prédéfinies.
